# EUROPÄISCHE PATENTSCHRIFT

(11) **EP 0 442 000 B1**
(45) Veröffentlichungstag und Bekanntmachung des Hinweises auf die Patenterteilung: **23.11.1994**
(21) Anmeldenummer: 90102784.7
(22) Anmeldetag: 13.02.1990
(51) Int. Cl.: B66F 9/07, B65G 1/04, B65G 1/137

(54) **Kommisionierkabine**
Commission cabin
Cabine de préparation des commandes

(43) Veröffentlichungstag der Anmeldung: 21.08.1991
(73) Patentinhaber: GEBHARDT FÖRDERTECHNIK GmbH Austria, A-6850 Dornbirn (AT)
(72) Erfinder: Locker, Ernst, A-6850 Dornbirn (AT)
(74) Vertreter: Ratzel, Gerhard, Dr.

(56) Entgegenhaltungen:
- DE-A- 2 120 324
- DE-A- 3 314 495
- FR-A- 2 224 400
- FR-A- 2 364 853
- FR-A- 2 567 181
- GB-A- 1 035 237
- GB-A- 1 187 260
- NL-A- 7 511 664
- F+H FÖRDERN UND HEBEN, Band 31, Nr. 9, September 1981, Seiten 674-675,Aschaffenburg, DE; F. GREMM: "Hochregallager-System für lange Ladeeinheiten undPaletten"

## Beschreibung

Die Erfindung betrifft ein Hochregallager mit einer in einem Regalförderzeug integrierten Kommissionierkabine.

Die rationelle Lagerung von Waren, Artikeln etc. führte zur Entwicklung von einheitlichen Lagereinheiten, z. B. auf Paletten, da diese untereinander, d.h. zwischen Produzent, Spediteur und Händler austauschbar sind.
Es wird hierbei unter dem Begriff "Paletten" u.a. die in DIN 15141 bis 15149 zusammengefaßten Mittel, wie Stapelplatten (Paletten), Stapelbehälter (Boxpaletten), Kästen, Gitter-Boxpaletten (Stapelgitterbehälter), Rungen- und Flachpaletten, aber auch sonstige palettierbare Einrichtungen verstanden.

Die Verwendung solcher Paletten führte einerseits zur Schaffung von Lagerhäusern mit in Konstruktion und Abmessungen den genormten Paletten weitestgehend angepaßten Regalen, andererseits zu solchen Regalen, in denen die Ladeeinheiten zu Kommissionierungszwecken zugreifbar sind.

Bei Wareneinlagerungsvoraussetzungen, bei denen sich Gabelstapler mit einer Stapelhöhe von maximal 7m bis 11m als Regalförderzeuge nicht mehr wirtschaftlich erwiesen haben, ist man zu den sogenannten "Hochregallagern", deren Lagerhöhe auf die Wirtschaftlichkeit abgestimmt werden kann, übergegangen.

Solche Hochregallager werden heute meist automatisch betrieben, d.h. entweder befindet sich im eigentlichen Lagerraum keine menschliche Person und das Hochregallager wird durch gesteuerte Regalförderzeuge betrieben, indem alle Ein- und Auslagerungsvorgänge mit diesen Fahrzeugen erfolgen oder werden mit Regalförderfahrzeugen befahren, in denen sich Personen zur Überwachung des Ein- und Auslagerungsvorganges oder zu Kommissionierzwecken befinden.

Im vollautomatischen Betrieb ist jedenfalls zusätzlich eine Kommissionierstation im Hochregallager einzurichten, da das Regalförderfahrzeug eine Palette aufnimmt, jedoch nicht das gesamte auf dieser Palette befindliche Gut benötigt wird. Das Regalförderfahrzeug legt also nach der Befehlseingabe den Weg zum Palettierort, zum Kommissionierort und wieder zum ursprünglichen Palettierort zurück. Je nach Warenart und Fahrfrequenz können solche Fahrwege zu einem Unwirtschaftlichkeitsfaktor werden.

Wenn in einem solchen Lager verschiedene Palettengrößen gelagert werden, so müssen die Fahrzeuge zusätzliche Sicherheitseinrichtungen, wie z. B. Profilkontrolle durchfahren.

Es liegt also die Erkenntnis zugrunde, daß die Wirtschaftlichkeit von Lagerhäusern u.a. von der internen Organisation abhängig ist. Nicht nur die optimale Einlagerung sondern auch der Warenfluß ist eine zu berücksichtigende Größe für die Wirtschaftlichkeit eines Lagers, d.h. unnötige Wege von Förderfahrzeugen während des Ein- und Auslagerns sowie während des Kommissionierens können zur Unwirtschaftlichkeit eines Lagers führen.

Als technische Einrichtungen haben sich daher solche Regalförderfahrzeuge als zweckmäßig erwiesen, die einen integrierten Kommissionierarbeitsplatz aufweisen, so daß das Palettiergut nicht vom Palettierort zu einem Kommissionierort befördert werden muß, sondern vor Ort die Kommissionierung erfolgen kann.

Hierbei ergeben sich naturgemäß Schwierigkeiten, die aus Sicherheitsbestimmungen, Konstruktionsvoraussetzungen und Art der Lagerung resultieren.
Einerseits ist das lichte Maß einer Regalgasse als auch das Schattenmaß des Regalförderfahrzeuges zu beachten, andererseits darf das lichte Maß zwischen Regalförderfahrzeug und Regal ein Mindest- und Höchstmaß aus sicherheitstechnischen Gründen nicht über- oder unterschreiten.

Ein Mindestabstand zwischen Regalförderzeug und Regal muß schon daher gegeben sein, damit die Regalförderzeuge beim schnellen Durchfahren der Regalgassen nicht mit unsachgemäß einpalettierten Waren zusammenstoßen.

Der maximale Abstand zwischen Regalförderzeug und Regal darf aufgrund der Absturzgefahr, der die Bedienungsperson unterliegt, nicht überschritten werden.

Diese technischen und Sicherheitsvorschriften schlagen sich jedoch in der Ergonomie negativ zu Buche, d.h. aufgrund der erforderlichen Mindest- und Höchstabstände wirken verschiedene Faktoren hinsichtlich der Zugänglichkeit der Bedienungspersonen zu den Regalen negativ ein.

Aus der AT-PS 354 937 ist ein Regalbedienungsgerät bekannt, das derart ausgebildet ist, daß eine freie Zugänglichkeit zu den Regalen gegeben ist. Aber auch diese weitgehendst optimierte Ausführung ist hinsichtlich der Zugänglichkeit zu den Regalen durch die Bedienungsperson noch nicht zufriedenstellend.

So verbleibt auch hier das Problem der Mindest- und Höchstabstände zwischen Regalförderzeug und Regal.

Die Regale selbst müssen dabei derart konstruiert sein, daß das Palettiergut mit seiner Längsseite zum Regalfahrzeug eingelagert ist. Dies bedeutet eine enorme Platzeinnahme und eine äußerst ungünstige Regalkonstruktion.

Aus der DE-A-33 14 495 ist ein Regalbediengerät für ein Hochregallager bekannt, das im wesentlichen aus einem horizontal und vertikal verfahrbaren Schlitten besteht, der einen Aufzugkorb für eine Bedienperson und eine Palettengreifeinrichtung mitführt. Die Greifeinrichtung läßt sich schwenken, sowie auf- und abbewegen, so daß die Bedienperson im Aufzugkorb den Schlitten an jeden gewünschten Punkt des Regals verfahren kann, dort mittels der Greifeinrichtung die Palette mit den gewünschten Waren aus dem Regal ziehen, dicht an den Aufzugkorb heranfahren und die gewünschte Menge an Waren der Palette entnehmen und im Aufzugkorb lagern kann. Dieser Aufzugkorb stellt somit eine Art Kommissionierkabine dar.

Das Kommissionierverfahren nach diesem Stand der Technik ist jedoch, wie unmittelbar einleuchtet, sehr aufwendig und zeitraubend; ein schneller und einfacher, direkter Zugriff der Bedienperson auf die noch im Regal befindlichen, palettierten Waren ist hier nicht möglich. Nach diesem Stand der Technik ist es außerdem schwierig, wenn nicht gar unmöglich, daß Paletten verschiedener Art in ein- und demselben Hochregallager gelagert werden, da die Greifeinrichtung zu den jeweiligen Paletten passen muß.

Außerdem ist es aufgrund des begrenzten Raumes für die Drehbewegung der Greifeinrichtung notwendig, die Paletten so in das Regal einzuordnen, daß ihre Längsachse parallel zum Regal liegt; die Raumausnutzung ist somit stark verbesserungsbedürftig.

Der vorliegenden Erfindung liegt daher die Aufgabe zugrunde, eine Kommissionierkabine für Hochregallagerförderfahrzeuge zu schaffen, bei der der Arbeits- und Bewegungsraum variabel gestaltbar ist, d.h. während des Fahrens die Kabine auf das vorgeschriebene Maß verschmälerbar ist, und am Einsatzort derart verbreiterbar ist, so daß die Zugänglichkeit zu den Regalen und somit zum Palettiergut gegeben ist, wobei die Zwischenräume zwischen Fahrzeug und Regal durch ausfahrbare Mittel, die die Kabine verbreitert geschlossen werden, so daß sich der Zugriffsbereich vergrößert und somit das Palettiergut mit seiner Längsseite in der Tiefe des Regals und somit platzsparend eingelagert werden kann, sowie um damit eine günstige Regalkonstruktion zu ermöglichen.

Diese Aufgaben werden erfindungsgemäß durch das Kennzeichen des Anspuchs 1 gelöst.

Besondere Ausführungsformen der Erfindung sind in den Unteransprüchen gekennzeichnet, wobei die erfindungsgemäße Kommissionierkabine für Hochregallager, welche in einem Regalförderzeug integriert ist, und einen Fahrbedienungsstand, Zugriffsbereich und Ladungsbereich aufweist, derart ausgebildet ist, daß die Kommissionierkabine an mindestens einer, zu den Regalen oder in die Fahrgasse hinweisende Seiten ausweitbar ausgebildet ist.

Eine bevorzugte Ausführungsform sieht hierbei vor, daß die Kommissionierkabine ein den Fahrbedienungsstand, den Zugriffsbereich und den Ladungsbereich umgebendes und dieses sicherndes Geländer aufweist, wobei das Geländer mindestens teilweise in Regalrichtung kippbar ausgebildet ist oder auch horizontal in Regalrichtung ausfahrbar ist, wobei das Geländer auf einem, aus dem Boden der Kommissionierkabine ausfahrbaren Bodenteil angeordnet ist, der die gleiche Ausfahrvorrichtung wie das Geländer vornimmt, um die zwischen Regalförderzeug und Regal vorhandene Lücke zu schließen.

Alternativ besteht auch die Möglichkeit, den Boden der Kommissionierkabine horizontal ver- oder ausfahrbar auszubilden bzw. die Ausweitung der Kommissionierkabine dadurch zu erreichen, daß eine kombinierte horizontale Ausfahrbarkeit mit kippbarem Geländer vorzusehen.

Um die Sicherung des Arbeitsraumes nicht nur auf den Zugriffsbereich und den Fahrstand zu begrenzen, sieht die vorliegende Erfindung vor, daß Geländer teleskopförmig ein- und ausfahrbar auszubilden, so daß dieses über den Ladungsbereich hinweg ein- und ausgefahren werden kann.

Anhand den beigefügten Zeichnungen, die besonders bevorzugte Ausführungsbeispiele der Erfindung zeigen, wird diese nun näher erläutert.

Dabei zeigen:
- Figur 1: eine perspektivische Darstellung eines an sich bekannten Palettenhochregallagers;
- Figur 2: eine Ansicht eines Palettenhochregallagers in die Fahrgassen;
- Figur 3: eine Draufsicht auf ein Hochregallager gemäß Figur 2;
- Figur 4: eine perspektivische Darstellung eines Palettierortes;
- Figur 5: bis
- Figur 7: die erfindungsgemäße Kommissionierkabine von verschiedenen Ansichten.

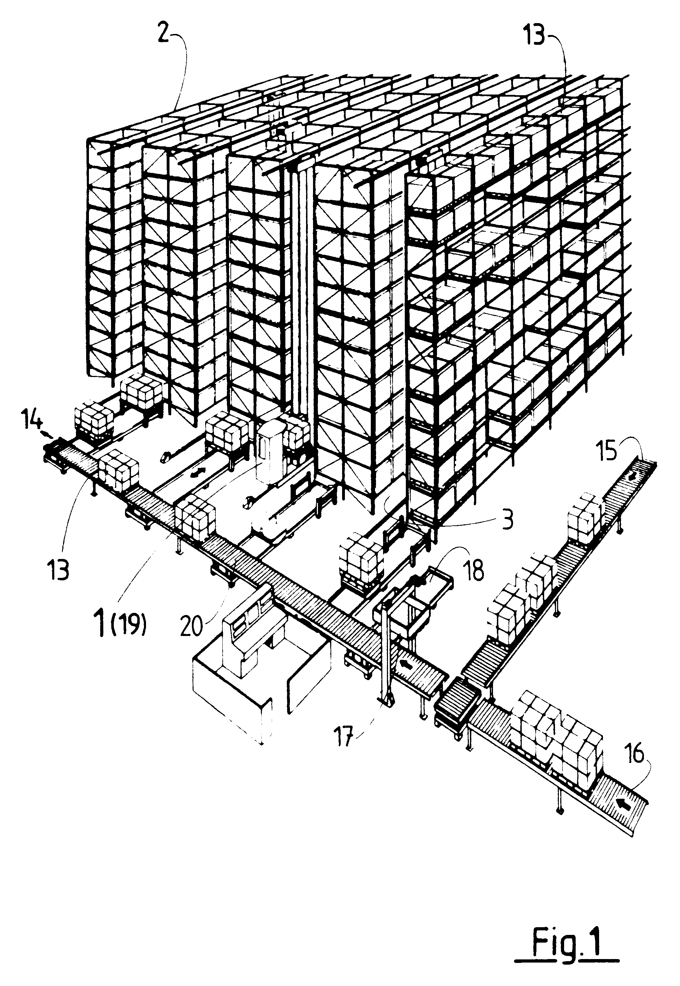

Figur 1 zeigt eine perspektivische Darstellung eines an sich bekannten Palettenhochregallagers.
Es sind in dieser Darstellung die Regale 2 erkennbar, in denen sich das Palettiergut 13 befindet. Ausgehend vom Wareneingang 15 und 16 wird das Palettiergut 13 auf die Förderanlagen 20 zur Aufnahme durch die Regalförderzeuge 19 bereitgestellt. Die Regalförderzeuge 19 sind, wie hier dargestellt, meist schienengebunden in den Fahrgasse 3 zwischen den Regalen 2 installiert.

Herkömmlicherweise sind die Regalförderzeuge 19 derart ausgebildet, daß diese bis zu einer Höhe von 30m zur Ein- und Auslagerung ganzer Lagereinheiten im Hochregallager fungieren. Nach der Auslagerung fährt das Regalförderzeug zu der Förderanlage 20, von wo aus das Fördergut in Pfeilrichtung zu einem externen Kommissionierbereich 14 geleitet wird.

Sobald die Teilware vom Palettiergut 13 entnommen ist, wird dieses wieder über eine der Wareneingänge 15, 16 dem Hochregallager zugeführt, wobei es stets erneut eine Palettenprüfeinrichtung 17 durchlaufen muß, um gegebenenfalls über die Ausschleusstation 18 von der Förderanlage 20 getrennt zu werden.

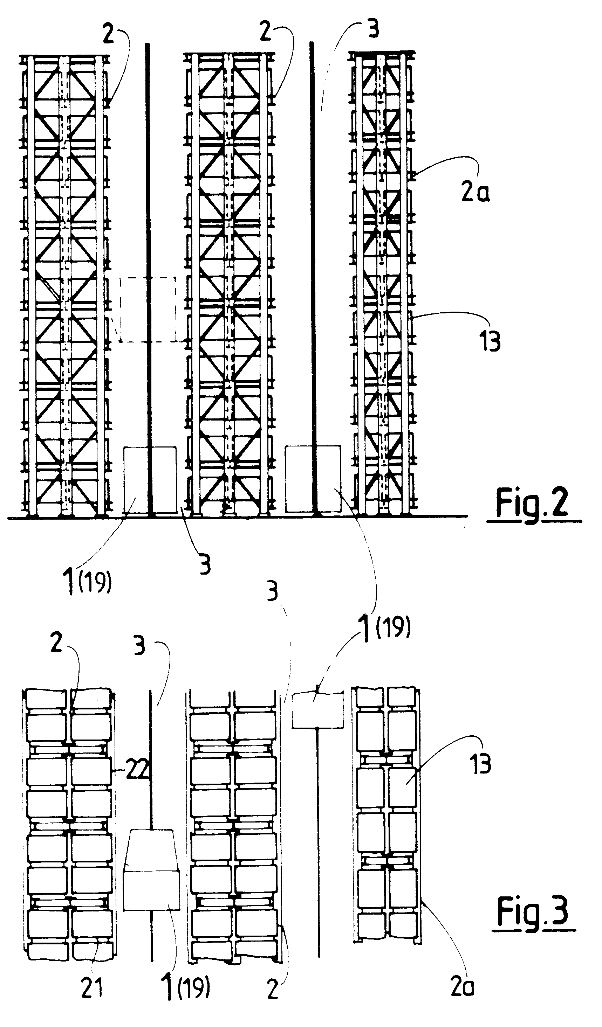

Wie auch aus den Figuren 2 und 3 zu erkennen ist, durchläuft das Regalförderzeug 19 hierbei große Wege, weshalb es mit der vorliegenden Erfindung u.a. vermieden werden soll, extern zu kommissionieren, also ein Regalförderzeug zu schaffen, das zugleich als Kommissionierkabine fungiert. Mit herkömmlichen Regalförderzeugen ist dies, auch aus sicherheitstechnischen Gründen, nur bei Hochregallagern bis zu einer Höhe von 12m möglich.

Unter Kommissionieren wird hierbei allgemein das Sammeln von Artikel aus einem Sortiment in einem Lager zur Zusammenstellung eines Auftrages verstanden. Es soll mit der vorliegenden Erfindung auch eine effiziente Kommissionierleistung, also eine optimale zahlenmäßige Entnahme von Artikeln pro Zeiteinheit über eine statische Bereitstellung (der Kommissionierer geht zur Ware) zu erreichen, da die Erkenntnis zugrunde liegt, daß die dynamische Bereitstellung, d.h. die Ware kommt zum Kommissionierer, für bestimmte Lagerprodukte unwirtschaftlich ist.

Ein besonderer Vorteil der vorliegenden Erfindung besteht darin, daß das Palettiergut 13 in der Tiefe eingelagert werden kann, d.h. das Palettiergut 13 ist mit seiner Längsseite 21 in das Regal 2 eingesetzt, so daß die Breitseite 22 in die Regalgasse 3 weist. Diese Anordnung ist aus der Figur 2 und 3 veranschaulicht.

Hier ist die Einlagerung des Palettiergutes 13 in den Regalen 2, wie vorbeschrieben, dargestellt, während in der rechten Regalseite 2a das Palettiergut 13 noch derart in die Regale eingesetzt ist, daß die Längsseite 21 zur Regalgasse 3 weist.

Die Wichtigkeit für die räumliche Einordnung des Palettiergutes 13 in die Regale 2 resultiert einerseits daraus, daß im Falle der Einpalettierung des Palettiergutes 13 mit der Längsseite 21 in die Regaltiefe eine statisch günstige Regalkonstruktion möglich ist und andererseits die auf dem Palettiergut 13 befindliche Ware auch dann für den Kommissionierer erreichbar ist, wenn die erfindungsgemäße Kommissionierkabine, wie beschrieben, ausgebildet ist.

Wie gesagt, ist also die Einpalettierung in der Tiefe der Regale günstig für die Statik der Regalkonstruktion, wie auch für die Raumausnutzung des Lagers.

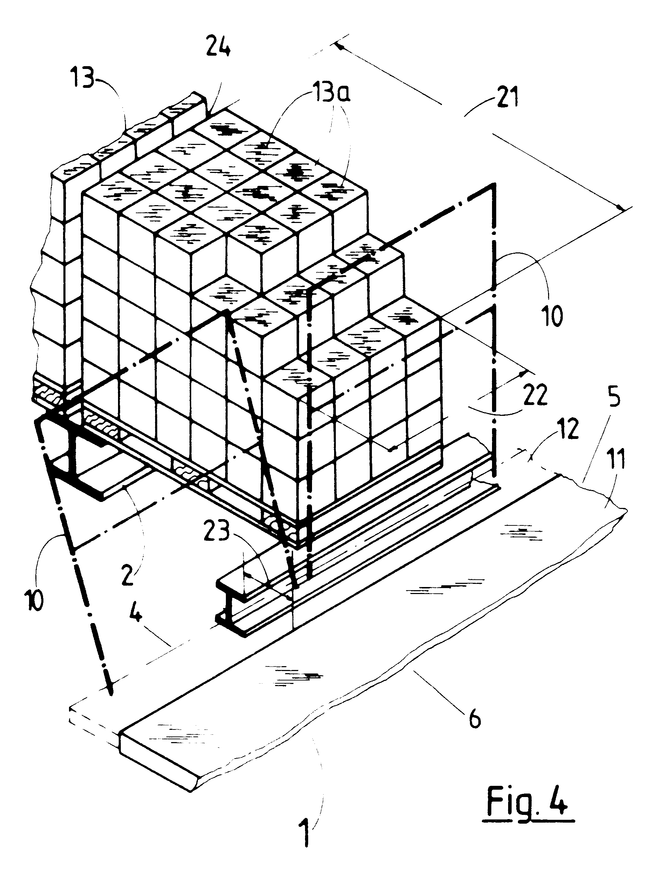

In Figur 4 ist eine solche Anordnung des Palettiergutes 13 im Regal 2 dargestellt.

Es ist nun klar ersichtlich, daß für den Kommissionierer das Einzelpalettiergut 13a einer geöffneten Palette 13 nur schwer zugänglich ist, da zwischen Kommissionierkabine 1 und Regal 2 ein gewisser Sicherheitsabstand 23 einzuhalten ist, und somit es aus Gefahrengründen gar nicht möglich ist, daß der Kommissionierer die Einzelware 13a in der Regalmitte 24 erreicht, weshalb das Palettiergut 13 herkömmlicherweise mit seiner Längsseite 21 zur Fahrgasse 3 hinweisend eingelagert wurde.

Mit der vorliegenden Erfindung ist es jedoch möglich, den Sicherheitsabstand 23 mittels eines ausfahrbaren Bodenteils 12, wie strichpunktiert dargestellt ist, zu überbrücken.
Zusätzlich oder alternativ ist es möglich, das Geländer 10 mindestens teilweise kippbar auszubilden, so daß der Zugriffsbereich noch weiter ausgeweitet wird.

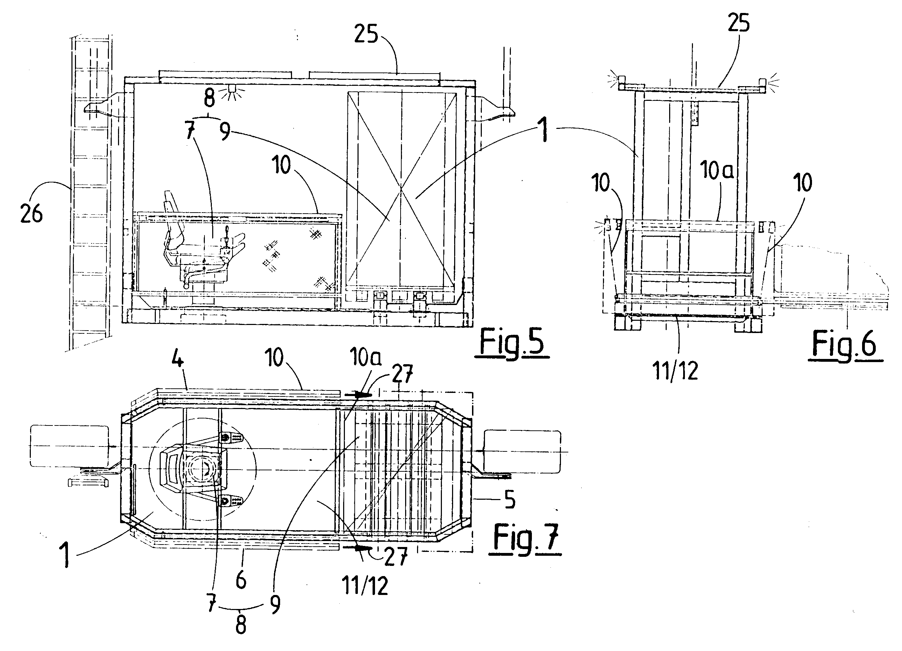

Die Figuren 5, 6 und 7 zeigen die erfindungsgemäße Kommissionierkabine in einer besonders bevorzugten Ausführungsform.

Die Kommissionierkabine 1 ist hierbei zunächst mit einem an sich bekannten Regalförderzeug 19 zu vergleichen und weist auch dementsprechend alle sicherheitstechnischen Einrichtungen, wie Dachabdeckung 25, Fluchtleiter 26 usw. auf.

Im hinteren Drittel der Kommissionierkabine 1 befindet sich der Fahrbedienungsstand 7 und im vorderen Drittel der Ladungsbereich 9.

Je nach Stellung des Geländers 10 wird der Zugriffsbereich 8 verkleinert oder über den Ladungsbereich 9 hinaus vergrößert. Sobald der Kommissionierauftrag vorliegt, wird die Kommissionierkabine 1 in die entsprechende Regalgasse 3 gesteuert, bis sie am entsprechenden ersten Palettierort angelangt ist. Sodann kann mit der erfindungsgemäßen Kommissionierkabine 1 folgender Vorgang ablaufen:

Falls der Ladungsbereich 9 frei ist, kann das Geländer 10 zunächst teleskopartig in Pfeilrichtung 27 ausgefahren werden. Die Ausgangslage ist in Figur 7 zunächst strichpunktiert dargestellt. Es ist auch erkennbar, daß zum Trennen des Zugriffsbereiches zunächst eine Quertraverse 10a des Geländers zwischen Ladungsbereich und Zugriffsbereich angeordnet ist. In der erweiterten Position (-..-) (strich-zweipunktiert) ist das teleskopförmige Geländer 10 bis über den Ladungsbereich hinaus ausgefahren. Somit ist ein erweiterter Zugriffsbereich geschaffen, der allseits gesichert ist. Um nun den Arbeitsbereich der Kommissionierkabine 1 zusätzlich zu erweitern, besteht die Möglichkeit, das Geländer 10 kippbar auszubilden, wie in der Figur 6 deutlich erkennbar ist.

Somit kann der Kommissionierer sich über die Kommissionierkabine 1 hinausbeugen, da der Zwischenraum bzw. der Sicherheitsabstand 23 zwischen Kommissionierkabine 1 und Regal 2 überbrückt wird. Zusätzlich oder alternativ ist es auch möglich, den Boden 11 der Kommissionierkabine 1 ausfahrbar auszubilden, so daß aus dem Boden 11 der Kommissionierkabine 1 ein Bodenteil 12 ausfährt, um den Sicherheitsabstand 23 auch räumlich zu schließen.

Hierzu hat es sich als zweckdienlich erwiesen, das Geländer 10 zu unterteilen, so daß dieses auch nur teilweise zu kippen ist, wenn z. B. eine Lücke im Palettierort vorliegt, wie dies in Figur 4 dargestellt ist, so daß der Kommissionierer teilweise seitlich an das Palettiergut 13 herangreifen kann.

Selbstverständlich ist die erfindungsgemäße Kommissionierkabine 1 mit z. B. optischen Überwachungseinheiten ausgerüstet, so daß das Fahrwerk bei ausgeweitetem Kommissionierbereich blockiert wird.

Mit der vorliegenden Erfindung wird eine Kommissionierkabine geschaffen, die die Kommissionierarbeit in ergonomischer und sicherheitstechnischen Belangen optimiert, da die Kommissionierarbeit nicht mehr durch die bestehenden und auch erforderlichen Sicherheitsvorschriften beeinträchtigt wird, da der Arbeitsbereich am Kommissionier-/Palettierort den jeweiligen Gegebenheiten angepaßt wird.

## Patentansprüche

1. Hochregallager mit einer in einem Regalförderzeug integrierten Kommissionierkabine, welche einen Fahrbedienungsstand, einen Zugriffsbereich und einen Ladungsbereich aufweist, und mit Fahrgassen für das Regalförderzeug, die die einzelnen Regale voneinander trennen,
dadurch gekennzeichnet,
daß die Kommissionierkabine (1) an mindestens einer, zu den Regalen (2) oder in die Fahrgasse (3) hinweisenden Seite (4 und/oder 5 und/oder 6) ausweitbar ausgebildet ist.

2. Kommissionierkabine nach Anspruch 1,
dadurch gekennzeichnet,
daß die Kommissionierkabine (1) ein den Fahrbedienungsstand (7), den Zugriffsbereich (8) und den Ladungsbereich (9) umgebendes und dieses sicherndes Geländer (10) aufweist.

3. Kommissionierkabine nach Anspruch 1 - 2,
dadurch gekennzeichnet,
daß das Geländer (10) mindestens teilweise in Regalrichtung kippbar ausgebildet ist.

4. Kommissionierkabine nach Anspruch 1 und einem der vorhergehenden Ansprüche,
dadurch gekennzeichnet,
daß das Geländer (10) mindestens teilweise horizontal in Regalrichtung ausfahrbar ausgebildet ist, wobei das Geländer (10) auf einem aus dem Boden (11) der Kommissionierkabine (1) ausfahrbaren Bodenteil (12) angeordnet ist.

5. Kommissionierkabine nach Anspruch 1 und einem der vorhergehenden Ansprüche,
dadurch gekennzeichnet,
daß der Boden (11) der Kommissionierkabine (1) horizontal ver- oder ausfahrbar ausgebildet ist.

6. Kommissionierkabine nach Anspruch 1 bis 5,
dadurch gekennzeichnet,
daß das Geländer (10) teleskopförmig ein- und ausfahrbar ausgebildet ist.

7. Kommissionierkabeine nach Anspruch 1 - 6,
dadurch gekennzeichnet,
daß das stirnseitige, im Ladungsbereich (9) angeordnete Geländerteil (10a) von den längsseitigen Geländerteilen (10) trennbar bzw. ausklinkbar ist.

## Claims

1. High shelves stockroom with a commissioning cabin which is integrated into a conveying system and which has a movement control booth, an accessing area and a charging area and which is provided with driving passages for the conveying system that separate the single shelves from each other, characterised in that the commissioning cabin (1) is extensible at least at one side (4 and/or 5 and/or 6) that faces the shelves (2) or the driving passages (3).

2. Commissioning cabin according to claim 1, characterised in that the commissioning cabin (1) is equipped with a railing (10) that is surrounding and protecting the movement control booth (7), the accessing area (8), and the charging area (9).

3. Commissioning cabin according to claim 1 - 2, characterised in that the railing (10) is at least partially pivotable into the direction of the shelve.

4. Commissioning cabin according to claim 1 and any one of the previous claims, characterised in that the railing (10) is at least partially horizontally extensible into the direction of the shelve, in the way that the railing (10) is arranged upon a bottom part (12) of the commissioning cabin (1) that can be extended from its bottom (11).

5. Commissioning cabin according to claim 1 and any one of the previous claims, characterised in that the bottom (11) of the commissioning cabin (1) is horizontally movable or extensible.

6. Commissioning cabin according to claim 1 to 5, characterized in that the railing (10) is telescopically retractable or extensible.

7. Commissioning cabin according to claim 1 to 6, characterised in that the part (10a) of the railing which is arranged at the front end within the charging area can be separated or released from the parts of the railing (10) at its long side.

## Revendications

1. Entrepôt à hauts rayonnages avec une cabine de transport de marchandises intégrée dans un chariot-élévateur pour rayonnages, ladite cabine comprenant un poste de commande de marche, une zone de préhension et une zone de chargement, et avec des voies de circulation pour le chariot-élévateur pour rayonnages, lesdites voies de circulation séparant les rayonnages individuels les uns des autres, caractérisé en ce que la cabine de transport de marchandises (1) est conçue d'une manière telle qu'elle peut être élargie sur au moins un côté (4 et/ou 5 et/ou 6) dans la direction des rayonnages (2) ou dans la voie de circulation (3).

2. Cabine de transport de marchandises selon la revendication 1, caractérisée en ce que la cabine de transport de marchandises (1) comporte un garde-fou (10) entourant le poste de commande de marche (7), la zone de préhension (8) et la zone de chargement (9) et protégeant ceux-ci.

3. Cabine de transport de marchandises selon les revendications 1-2, caractérisée en ce que le garde-fou (10) peut être rabattu au moins partiellement dans la direction des rayonnages.

4. Cabine de transport de marchandises selon la revendication 1 et l'une des revendications précédentes, caractérisée en ce que le garde-fou (10) peut être sorti au moins partiellement, horizontalement, dans la direction des rayonnages, ledit garde-fou (10) étant disposé sur une partie de fond (12) pouvant être sortie du fond (11) de la cabine de transport de marchandises (1).

5. Cabine de transport de marchandises selon la revendication 1 et l'une des revendications précédentes, caractérisée en ce que le fond (11) de la cabine de transport de marchandises (1) peut être déplacé ou sorti horizontalement.

6. Cabine de transport de marchandises selon l'une des revendications 1 à 5, caractérisée en ce que le garde-fou (10) peut être rentré ou sorti de façon téléscopique.

7. Cabine de transport de marchandises selon l'une des revendications 1 à 6, caractérisée en ce que la partie (10a) du garde-fou, disposée du côté frontal dans la zone de chargement (9), peut être séparée ou déverrouillée des parties (10) du garde-fou, qui forment les grands côtés de celui-ci.
